(19) Europäisches Patentamt
European Patent Office
Office européen des brevets

(11) Veröffentlichungsnummer: **0 120 466 B2**

# (12) NEUE EUROPÄISCHE PATENTSCHRIFT

(45) Veröffentlichungstag der neuen Patentschrift: **20.03.91 Patentblatt 91/12**

(21) Anmeldenummer: **84103141.2**

(22) Anmeldetag: **22.03.84**

(51) Int. Cl.[5]: **C09D 5/46**, C09D 133/00, C09D 163/00, C09D 167/08, C08G 59/56

## (54) Hitzehärtbare Überzugsmittel und deren Verwendung.

(30) Priorität: **30.03.83 DE 3311518**

(43) Veröffentlichungstag der Anmeldung: **03.10.84 Patentblatt 84/40**

(45) Bekanntmachung des Hinweises auf die Patenterteilung: **25.06.86 Patentblatt 86/26**

(45) Bekanntmachung des Hinweises auf die Entscheidung über den Einspruch: **20.03.91 Patentblatt 91/12**

(84) Benannte Vertragsstaaten: **AT BE CH DE FR GB IT LI NL SE**

(56) Entgegenhaltungen:
**EP-A- 0 027 641**
**EP-A- 0 102 556**
**EP-A- 0 119 769**
**US-A- 4 122 069**

(73) Patentinhaber: **BASF Lacke + Farben Aktiengesellschaft**
**Max-Winkelmann-Strasse 80**
**W-4400 Münster (DE)**

(72) Erfinder: **Loch, Werner, Dr.**
**In der Bleiche 2**
**W-6701 Erpolzheim (DE)**
Erfinder: **Schupp, Eberhard. Dr.**
**Tilsiter Weg 4**
**W-6830 Schwetzingen (DE)**
Erfinder: **Osterloh, Rolf, Dr.**
**Am Wehrhaus 16 a**
**W-6718 Gruenstadt (DE)**
Erfinder: **Ahlers, Klaas, Dr.**
**Foehrenweg 21**
**W-4400 Muenster (DE)**

(74) Vertreter: **Welzel, Gunther, Dr. et al**
**c/o BASF Aktiengesellschaft**
**Carl-Bosch-Strasse 38**
**W-6700 Ludwigshafen (DE)**

EP 0 120 466 B2

**Beschreibung**

Die Erfindung betrifft hitzehärtbare Überzugsmittel, welche ohne Säurekatalyse und ohne Formaldehydabspaltung aushärten, und deren Verwendung.

Aminoplasthärter, z.B. Harnstoff-, Melamin- oder Benzoguanaminharze sind als übliche Vernetzer bekannt. Sie enthalten Methylol- bzw. Methylolethergruppen. Ihre Wirksamkeit ist an das Vorhandensein von sauren Gruppen im Bindemittel oder zumindest an das Fehlen von basischen Gruppen gebunden, was nicht nur ihre Einsatzmöglichkeiten beschränkt, sondern durch die im Film verbleibende Säure auf metallischen Substraten auch zu Korrosion führen kann ; ausserdem wird bei der Vernetzungsreaktion stets Formaldehyd abgespalten, z.T. in erheblichen Mengen.

Im EP 12 463 und EP 40 867 sind hitzehärtbare Überzugsmittel beschrieben, welche ohne Säurekatalyse und ohne Formaldehydabspaltung über eine Umesterungsreaktion vernetzen. Als Verwendungszweck werden u.a. organisch gelöste Lacke, Pulverlacke und kathodische Elektrotauchlacke genannt. Um bei Härtungstemperaturen < 200°C eine ausreichende Vernetzung der Lackfilme zu erreichen, muss der Vernetzer über eine genügende Anzahl von β-Hydroxyestergruppierungen, die bekanntermassen wesentlich leichter umgesetzt werden können als normale Estergruppen, verfügen. β-Hydroxyester sind jedoch hydrolyseempfindlich. Dies führt zu Badstabilitätsproblemen, wenn die Überzugsmittel als Bindemittel für kathodische Elektrotauchlacke verwendet werden sollen.

Mit der Maßgabes, daß mindestens zwei Reste für Methyl und/oder Ethyl stehen. S. Anlage

Ein weiterer, genereller Nachteil der Überzugsmittel gemäss EP 12463 und EP 40867 besteht darin, dass durch die Vernetzungsreaktion Esterbindungen geknüpft werden, welche relativ hydrolyseempfindlich sind ; dies kann sich nachteilig auf den Korrosionsschutz der Beschichtungen auswirken.

Aufgabe der vorliegenden Erfindung war es, diese Nachteile zu beheben, d.h. eine neue Art von hitzehärtbaren Überzugsmitteln bereitzustellen, die organisch gelöste Einbrennlacke oder Pulverlacke ergeben, die in Abwesenheit von Säure ohne Formaldehydabspaltung aushärten. Eine weitere Aufgabe der vorliegenden Erfindung bestand darin, hitzehärtbare Überzugsmittel aufzuzeigen, die nach Neutralisation mit einer Säure wasserverdünnbar, über einen Zeitraum von ≧ 3 Monaten als wässerige Dispersion stabil sind, sich auf einem als Kathode dienenden metallischen Substrat abscheiden lassen und bei Temperaturen << 200°C zu Überzügen mit ausgezeichnetem Korrosionsschutz eingebrannt werden können.

Gegenstand der vorliegenden Erfindung sind hitzehärtbare Überzugsmittel, die dadurch gekennzeichnet sind, dass sie als Bindemittel enthalten ein Gemisch aus

(A) 1 bis 90 Gew.% eines Polyadditions-, Polykondensations- oder Polymerisationsproduktes mit einem mittleren Molekulargewicht $\overline{M}_n$ von 500 bis 10000, welches im Mittel pro Molekül mindestens zwei OH- und/oder primäre und/oder sekundäre Amino-Gruppen besitzt, und

(B) 99 bis 10 Gew.% eines Umsetzungsprodukts aus

a) mindestens einem Polyamin, das im Mittel mindestens zwei primäre Aminogruppen pro Molekül und gegebenenfalls zusätzlich Hydroxylgruppen enthält, und

b) 75 bis 200 Mol.%, bezogen auf die primären Aminogruppen der Komponente a) mindestens eines cyclischen Kohlensäureesters der allgemeinen Formel (I)

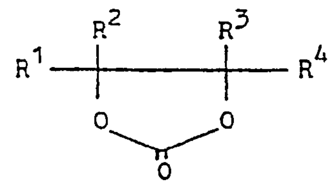

(I),

worin $R^1$, $R^2$, $R^3$ und $R^4$ untereinander gleich oder verschieden sind und für Wasserstoff, einen Methyl- oder einen Ethylrest stehen.

In der EP-A-119 769 wird eine Beschichtungsmasse beschrieben auf der Basis eines wärmehärtbaren Harzes, das als Harzbindemittel ein filmbildendes Harz enthält mit einer β-Hydroxycarbamat-Gruppe, die höchstens mit einem Alkylsubstituenten substituiert ist.

In der EP-A-102 556 wird eine härtbare Mischung beschrieben, die ein β-Hydroxyurethan enthält. Die in dieser Schrift beschriebenen Aufbaukomponenten führen zu β-Hydroxyurethanen mit höchstens einem Alkylsubstituenten.

Aus der US-A-4 122 069 ist die Mitverwendung bestimmter Polyether, die an den Kettenenden Hydroxylalkylcarbamatgruppierungen enthalten (z. B. Additionsprodukte von 2 Mol Ethylencarbonat an 1 Mol Polyetherdiamin vom Molekulargewicht 2000 bis 3000) zur Haftungsverbesserung von Klebstoffen auf Epoxidharzbasis, die bei Raumtemperatur aushärten, bekannt. Diese Systeme enthalten jedoch noch intakte Epoxidgruppen, über die die Vernetzung erfolgt, während erfindungsgemäss u.a. Epoxid/Amin-Addukte, die keine freien Epoxidgruppen mehr enthalten, bei erhöhter Temperatur mit den Hydroxyalkylcarbamaten (8) vernetzt werden.

Komponente (A) kann vorzugsweise ein Polyester, ein Polyacrylat oder insbesondere ein stickstoffbasische Gruppen tragendes Polyadditionsprodukt, das an aromatische Ringe gebundene Gruppierun-

gen der Formel

$$-CH_2-NH-\overset{\overset{\displaystyle O}{\|}}{C}-CR^5=CHR^6$$

($R^5$ und $R^6$ = H oder Methyl)

enthält, ein Umsetzungsprodukt aus phenolischen Mannichbasen und Epoxidharzen oder ein Umsetzungsprodukt aus einem oder mehreren aromatischen oder aliphatischen Epoxidharzen und einem oder mehreren primären oder sekundären Aminen sein.

Gegenstand der vorliegenden Erfindung ist ausserdem die Verwendung der erfindungsgemässen Überzugsmittel als Bestandteil organisch gelöster Einbrennlacke und für die Pulverlackierung.

Ferner sind derartige durch zumindest teilweise Neutralisation mit einer Säure wasserverdünnbare Überzugsmittel, die damit erhältlichen wässerigen Lackbader und deren Verwendung für die kathodische Elektrotauchlackierung Gegenstand der Erfindung.

Zu den Aufbaukomponenten der erfindungsgemässen Überzugsmittel ist im einzeinen folgendes zu sagen :

(A) Die Komponente (A) kann aus den verschiedensten Verbindungsklassen ausgewählt werden. Wichtig ist, dass sie ein mittleres Molekulargewicht $\overline{M}_n$ zwischen 500 und 10000 aufweist und im Mittel mindestens zwei OH- und/oder primäre und/oder sekundäre Amino-Gruppen besitzt.

Bevorzugt soll die Komponente (A) einen harzartigen Charakter haben. Beispiele geeigneter Materialien sind Polyester, Alkydharze, Polyether, Polyacrylatharze, Polyurethane. Polyurethanharnstoffe, Epoxidharze und ihre Umsetzungsprodukte mit Alkoholen, Mercaptanen oder Aminen. Eine weitere geeignete Verbindungsklasse sind Polydienharze oder -öle, z.B. Polybutadienöle. In diese lassen sich z.B. durch Addition von Mercaptoethanol an einen Teil der Doppelbindungen OH-Gruppen einführen. Eine weitere Möglichkeit, OH-Gruppen einzuführen, ist die Umsetzung mit Maleinsäureanhydrid und nachfolgende Reaktion mit OH-haltigen Aminen wie Ethanolamin oder Diethanolamin. Auch durch Epoxidierung der Polybutadienöle mit Persäuren und anschliessende Umsetzung mit Aminen lässt sich die benötigte Derivatisierung durchführen.

Geeignete Polyester sind z.B. solche mit einem mittleren Molekulargewicht $\overline{M}_n$ von 500 bis 10000 und einer Hydroxylzahl von 25 bis 400, erhältlich aus aliphatischen und/oder aromatischer Dicarbonsäuren mit 4 bis 10 Kohlenstoffatomen, beispielsweise Bernsteinsäure, Glutarsäure, Adipinsäure, Pimelinsäure, Korksäure, Azelainsäure, Sebacinsäure, Cyclohexandicarbonsäure, Phthalsäure, Isophthalsäure oder Terephthalsäure bzw. deren Derivaten und aliphatischen Diolen, wie Ethylenglykol, Diethylenglykol, Triethylenglykol, Polyethylenglykol, Propandiol, Butandiol, Hexandiol, Neopentylglykol oder Hydroxypivalinsäureneopentylglvkolester und gegebenenfalls höherwertigen Alkoholen, wie Trimethylolpropan, Glycerin, Erythrit, Pentaerythrit, Trimethylolbenzol oder Trishydroxyethylisocyanurat.

Geeignete Alkydharze sind ähnlich aufgebaut, nur enthalten sie bis zu 40 Gew.% einer oder mehrerer Monocarbonsäuren, wie z.B. Fettsäuren. Auch Alkydharze, welche Glycidylester von verzweigten Carbonsäuren enthalten, können verwendet werden.

Geeignete Polyether sind z.B. aliphatische oder araliphatische Polyether, welche durch Umsetzung von zwei- und/oder mehrwertigen Alkoholen, mit verschiedenen Mengen an Ethylen- und/oder Propylenoxid erhalten werden.

Geeignete Polyacrylate sind OH-gruppenhaltige Polyacrylate mit einer Hydroxylzahl von 25 bis 500. Diese sollten eine Säurezahl < 25, bevorzugt < 10 und einen K-Wert nach Fikentscher (3%ig in Aceton) von 10 bis 40, vorzugsweise von 12 bis 25 aufweisen und können folgende Monomeren enthalten :

10 bis 100 Gew.%, vorzugsweise 20 bis 40 Gew.%, mindestens eines Hydroxy-(C2-C4)alkylesters einer $\alpha,\beta$-ethylenisch ungesättigten Carbonsäure, beispielsweise 2-Hydroxyethyl- und Hydroxypropyl(meth-)acrylat sowie Butandiolmono(meth-)acrylat, 0 bis 90 Gew.%, vorzugsweise 60 bis 80 Gew.%, mindestens einer ethylenisch umgesättigten von Carboxyl- und Hydroxylgruppen freien Verbindung, beispielsweise Vinylaromaten, wie Styrol und Vinyltoluol, Vinylester von Carbonsäuren mit 2 bis 18 Kohlenstoffatomen, wie Vinylacetat und Vinylpropionat, Vinylether von Monoalkanolen mit 1 bis 18 Kohlenstoffatomen, wie Vinylmethylether und Vinylisobutylether, Ester der Acrylsäure oder Methacrylsäure mit $C_1$- bis $C_{18}$-Monoalkanolen, entsprechende Maleinsäure-, Fumarsäure- und Itaconsäurediester, (Meth-) acrylsäureamid, (Meth-)acrylsäurenitril sowie Gemische dieser Monomeren, wobei Styrol und (Meth -) acrylsäureester bevorzugt sind.

Geeignete Polyurethane sind :

OH-gruppenhaltige Polyurethane mit einer Hydroxylzahl von 25 bis 600 aus aliphatischen und/oder aromatischen Diisocyanaten, die beispielsweise aus Tetramethylendiisocyanat, Hexamethylendiisocyanat, Isophorondiisocyanat, Diphenylmethandiisocyanat, Toluylendiisocyanat, Naphthylendiisocyanat, 4,4'-Diphenyletherdiisocyanat, sowie gegebenenfalls daraus hervorgehende Di- oder Trimere, und aliphatischen Diolen, wie Ethylenglykol, Diethylenglykol, Triethylenglykol, Polyethylenglykole, Propandiol, Butandiol, Hexandiol, Neopentylglykol oder Hydroxypivalinsäureneo-pentylglykolester und gegebenenfalls höherwertigen Alkoholen, wie

Trimethylolpropan, Glycerin, Pentaerythrit, Trimethylolbenzol oder Trishydroxyethylisocyanurat erhältlich sind.

Geeignete Polyurethanharnstoffe sind entsprechende Umsetzungsprodukte aus den genannten Polyisocyanaten und den genannten aliphatischen Diolen bzw. höherwertiyen Alkoholen im Gemisch mit aliphatischen Diaminen, wie beispielsweise Ethylendiamin, Propylendiamin, 1,4-Butandiamin, 1,5-Pentandiamin, Neopentandiamin, Hexamethylendiamin, Diaminocyclohexan, Diaminodicyclohexylmethan, 3,3-Dimethyl-4,4'-diamin-dicyclohexylmethan, 4,9-Dioxadodecan-1,12-diamin, und gegebenenfalls höherwertigen Aminen, wie beispielsweise Trisaminoethyl-amin oder 1,1,1-Trisaminopropoxymethylpropan.

Auch reine Polyharnstoffe, beispielsweise aus den genannten Polyisocyanaten und den genannten Polyaminen können als Komponente (A) in den erfindungsgemässen Überzugsmitteln eingesetzt werden.

Geeignete Epoxidharze sind z.B. Glycidylether, wie sie aus 2,2-Bis-(4-hydroxyphenyl)-propan und Epichlorhydrin hergestellt werden. Diese Epoxidharze können weiter modifiziert sein, z.B. durch Umsetzung mit polyfunktionellen Alkoholen oder SH-Verbindungen. Beispiele solcher polyfunktioneller Alkohole sind Ethylenglykol, Propandiol-1,2, Propandiol-1,3, Butandiol-1,4. Ist eine Elastifizierung erwünscht, können auch langkettige polyfunktionelle Alkohole oder Mercaptane eingesetzt werden. Werden die polyfunktionellen Alkohole oder Mercaptane in grösseren als äquivalenten Mengen in bezug auf die vorhandenen Epoxid-gruppen eingesetzt, so entstehen Produkte mit endständigen OH- oder SH-Gruppen. Setzt man dagegen geringere als äquivalente Mengen ein, so entstehen Produkte mit endständigen Epoxidgruppen, die gegebenenfalls weiter umgesetzt werden können. Während die Umsetzung der Mercaptane mit Epoxidgruppen bereits ohne Katalysator abläuft, sind für die Umsetzung der Alkohole die Verwendung eines Katalysators, wie z.B. Dimethylbenzylamin und höhere Temperaturen (etwa 50 bis 150°C) notwendig.

Umsetzungsprodukte von Epoxidharzen mit primären oder sekundären Aminen sind ebenfalls als Komponente (A) einsetzbar. Dabei bietet sich besonders die Umsetzung mit hydroxylgruppenhaltigen Aminen, wie z.B. Ethanolamin, Methylethanolamin und Diethanolamin an.

Werden als Komponente (A) solche Produkte eingesetzt, die ausreichende Mengen an Amino-gruppen enthalten, um nach Protonierung mit Säuren wasserlöslich oder wasserdispergierbar zu werden, lassen sich in Kombination mit Komponente (B) wasserdispergierbare Einbrennlackbindemittel herstellen, insbesondere solche, die für die kathodische Elektrotauchlackierung verwendet werden können. Für diesen Zweck können die oben erwähnten Umsetzungsprodukte von Epoxidharzen mit primären oder sekundären Aminen eingesetzt werden.

Viele der für die kathodische Elektrotauchlackierung vorgeschlagenen Trägerharze sind auch als Komponente (A) in den erfindungsgemässen Überzugsmitteln einsetzbar, so z.B. die Umsetzungsprodukte phenolischer Mannichbasen mit Epoxidharzen gemäss der DE-PS 2419179, die Umsetzungsprodukte von kettenverlängerten Epoxidharzen mit sekundären Aminen gemäss der US-PS 4104147, Umsetzungsprodukte von (meth)acrylamidomethylierten Phenolen, Aminen und Epoxidharzen gemäss EP 27 641, EP 41 619 etc ; wichtig ist nur, dass sie ein mittleres Molekulargewicht $M_n$ von 500 bis 10000 aufweisen und im Mittel pro Molekül minöestens zwei OH- und/oder primäre und/oder sekundäre Amino-Gruppen besitzen. Während es für die Vernetzungsaktivität beim Einbrennen völlig ausreicht, wenn die Komponente (A) lediglich OH- und keine primäre und/oder sekundäre Amino-Gruppen enthält, ist es doch häufig vorteilhaft, Produkte einzusetzen, die auch primäre und/oder sekundäre Amino-gruppen enthalten, da sich damit wässerige Elektrotauchlackbäder mit relativ hohen pH-Werten von z.B. 6,5 bis 8,0 herstellen lassen. Durch hohe pH-Werte, vor allem solche nahe pH 7 oder darüber, lässt sich eine Korrosion von Anlagen vermeiden.

Eine Möglichkeit, um zu als Komponente (A) geeigneten Produkten mit primären und sekundären Aminogruppen zu kommen, ist die Umsetzung von überschüssigen primären Diaminen mit Epoxidharzen und anschliessende Abtrennung des überschüssigen Amins bei erhöhter Temperatur und vermindertem Druck. Als Diamine kommen dafür vor allem solche mit 2 bis 6 Kohlenstoffatomen in Betracht, z.B. Ethylendiamin, 1,2- und 1,3-Diaminopropan, 1,4-Diaminobutan, Neopentandiamin und Hexamethylendiamin. Die Reaktionsprodukte können, falls gewünscht, mit Dicarbonsäuren kettenverlängert werden, z.B. mit Sebacinsäure oder dimerer Fettsäure. Durch das Verhältnis Dicarbonsäure zu Epoxid/Amin-Addukt kann man das gewünschte Molekulargewicht einstellen, z. B. kann man auf zwei Moleküle Epoxid/Amin-Addukt 1 Mol dimerer Fettsäure einsetzen.

Eine weitere Möglichkeit, als Komponente (A) geeignete Produkte mit primären Aminogruppen herzustellen, ist der Umsatz von Epoxidharzen mit sekundären Aminen, die geblockte primäre Aminogruppen enthalten. Beispiele für solche Amine sind das Diketimin von Diethylentriamin, das Ketimin von Aminoethylethanolamin, das Ketimin von Diethylentriamin, das Ketimin von Aminoethylethanolamin, das Ketimin von N-Methyl-ethylendiamin und das Ketimin von N-Aminoethylpiperazin. Die Ketimine lassen sich in einfacher Weise aus den freien Aminen und einem Keton, z.B. Methylisobutylketon, unter Auskreisen von Wasser herstellen. Bei der Umsetzung mit Epoxidharzen reagiert nur die sekundäre Aminogruppe, anschliessend kann das Ketimin durch einfache Zugabe von Wasser gespalten werden, wobei sich die freie primäre Aminogruppe zurückbildet.

Durch Umsetzung eines Teils der primären Aminogruppen mit Dicarbonsäuren lassen sich auch diese Produkte durch Kettenverlängerung elastifizieren.

Komponente (A) ist im erfindungsgemässen Bindemittelgemisch in einer Menge von 1 bis 90, vorzugsweise 50 bis 85 Gew.%, insbesondere 65 bis 80 Gew.% enthalten.

(B) Bei der Komponente (B) handelt es sich um ein Umsetzungsprodukt aus

a) mindestens einem Polyamin, das mindestens zwei primäre Aminogruppen pro Molekül und gegebenenfalls zusätzlich OH-Gruppen enthält, und

b) 75 bis 200 Mol.%, vorzugsweise 100 bis 150 Mol.%, bezogen auf die primären Aminogruppen der Komponente (a), mindestens eines cyclischen Kohlensäureesters der Formel (I)

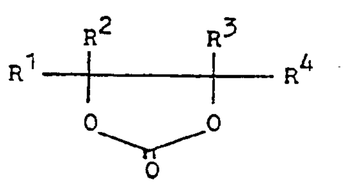
(I),

worin $R^1$, $R^2$, $R^3$ und $R^4$ untereinander gleich oder verschieden sind und entweder für Wasserstoff, einen Methyl- oder einen Ethylrest stehen mit der Maßgabe, daß mindestens zwei Reste für Methyl und/oder Ethyl stehen.

Komponente (B) ist in den erfindungsgemässen Überzugsmitteln in Mengen von 10 bis 99 Gew.%, vorzugsweise 15 bis 50 Gew.%, insbesondere 20 bis 35 Gew.% enthalten.

Als Polyamin (a) kommen prinzipiell alle aliphatischen und araliphatischen Polyamine in Frage, die mindestens zwei primäre Aminogruppen pro Molekül enthalten. Beispiele geeigneter Amine sind Ethylendiamin, Propylendiamin, 1,4-Diaminobutan, 1,5-Diaminopentan, Neopentandiamin, Hexamethylendiamin, 4,9-Dioxadodecandiamin-1,12, 4,4'-Diaminodicyclohexylamin, 4,4'-Bis (aminoethoxy)-2,2-diphenylpropan, 4,4'-Bis (aminopropoxy)-2,2-diphenylpropan, Tris-(aminoethyl)-amin, 1,1,1-Tris-aminopropoxymethylpropan, β,β-Bis-(aminomethyl)-n-butylamin, Tetrakis-(aminomethyl)-methan, Tris-(aminoethyl)-isocyanurat und Tris-(aminomethyl)benzol, wobei in den letztgenannten sechs Beispielen ein Teil der Aminogruppen durch OH-Gruppen ersetzt sein kann, derart, dass im Mittel mindestens zwei primäre Aminogruppen pro Molekül enthalten sind.

Als weitere Beispiele für geeignete Polyamine (a) sind Amidamine zu nennen, die beispielsweise durch Umsetzung von Polycarbonsäuren, wie z.B. Phthalsäure, Isophthalsäure, Terephthalsäure, Trimellitsäure, Trimesinsäure, Pyromellitsäure und dgl. bzw. deren Anhydriden mit Überschüssen an Diaminen, wie beispielsweise Propylendiamin, 1,4-Diaminobutan, 1,5-Diaminopentan, Neopentandiamin, Hexamethylendiamin und dgl. bei erhöhten Temperaturen unter Wasserabspaltung nach destillativer Entfernung des überschüssigen Diamins im Vakuum erhalten werden.

Neben derartigen Polyaminen mit niedrigem, definiertem Molekulargewicht sind auch oligomere oder polymere Polyamine mit Molekulargewichten bis zu 3000 einsetzbar. Beispiele solcher Polyamine sind Diamine, die durch reduktive Cyanethylierung von Polyolen wie Polytetrahydrofuran herstellbar sind. Derartige Produkte enthalten endständige primäre Aminogruppen in Form von Aminopropoxygruppen. Sie können noch mehr oder weniger grosse Mengen an OH-Gruppen enthalten.

Bei einer weiteren Gruppe von oligomeren oder polymeren Polyaminen mit Molekulargewichten bis zu 3000, die als Komponente (a) geeignet sind, handelt es sich um Epoxid/Amin-Addukte, die im Mittel mindestens zwei primäre Aminogruppen pro Molekül und ausserdem OH-Gruppen enthalten. Ihre Herstellung kann im wesentlichen auf zwei Wegen erfolgen.

Der erste besteht in der Umsetzung von Epoxidharzen mit überschüssigen primären Diaminen und der anschliessenden Abtrennung des überschüssigen Diamins bei erhöhter Temperatur und vermindertem Druck.

Dafür geeignete Epoxidharze sind z.B. Polyglycidylether von Polyphenolen, wie beispielsweise 2,2-Bis-(4-hydroxyphenyl)-propan, 1,1-Bis-(4-hydroxyphenyl)-ethan, Bis-(4-hydroxyphenyl)-methan, Bis-(2-hydroxynaphthyl)-methan und dgl., die durch Veretherung der genannten Polyphenole mit Epichlorhydrin in Gegenwart von Alkali hergestellt werden, Polyglycidylether von mehrwertigen Alkoholen, die durch entsprechende Umsetzung von Epichlorhydrin mit mehrwertigen Alkoholen, wie Ethylenglykol, Diethylenglykol, Triethylenglykol, Propandiol-1,2, Propandiol-1,3, Pentandiol-1,5, 2,2-Bis-(4-hydroxycyclohexyl)-propan, Glycerin, Trimethylolpropan, Pentaerythrit und dgl. erhalten werden, N,N-Diglycidyl-Derivate von N-Heterocyclen und Triglycidylisocyanurat.

Aus Elastizitätsgründen kann es von Vorteil sein, die genannten Epoxidharze vor der Umsetzung mit Aminen mit geringeren als äquivalenten Mengen an langkettigen polyfunktionellen Alkoholen oder Mercaptanen zu modifizieren.

Auch eine Elastifizierung durch langkettige Disek.-Amine, wie beispielsweise Dimerfettsäure-bis-[2-(2-hydroxyethylamino)-ethyl]-amid, die ebenfalls in geringeren als äquivalenten Mengen eingesetzt werden, ist möglich. In diesem Falle können Elastifizierung und Aminumsetzung synchron durchgeführt werden.

Als Diamine kommen hierfür vor allem solche mit 2 bis 6 Kohlenstoffatomen in Betracht, z.B. Ethylendiamin, 1,2- und 1,3-Diaminopropan, 1,4-Diaminobutan, Neopentandiamin und Hexamethylendiamin. Die Reaktionsprodukte können, falls keine vorherige Elastifizierung erfolgt ist, mit Dicarbonsäuren kettenverlängert werden, z.B. mit Sebacinsäure oder dimerer Fettsäure. Durch das Verhältnis Dicarbonsäure zu Epoxid/Amin-Addukt kann man das gewünschte Mölekulargewicht einstellen, z.B. kann man auf zwei Moleküle Epoxid/Amin-Addukt 1 Mol dimerer Fettsäure einsetzen.

Der zweite Weg besteht in der Umsetzung der genannten Epoxidharze mit sekundären Aminen, die geblockte primäre Aminogruppen enthalten. Beispiele für solche Amine sind das Diketimin von Diethylentriamin, das Ketimin von Aminoethyl-ethanolamin, das Ketimin von N-Aminoethyl-piperazin und das Ketimin von N-Methyl-ethylendiamin. Die Ketimine lassen sich in einfacher Weise aus den freien Aminen und einem Keton, z.B. Methylisobutylketon, unter Auskreisen von Wasser herstellen. Bei der Umsetzung mit Epoxidharzen reagiert nur die sekundäre Aminogruppe ; anschliessend kann das Ketimin durch einfache Zugabe von Wasser gespalten werden, wobei sich die freie primäre Aminogruppe zurückbildet. Durch Umsetzung eines Teils der primären Aminogruppen mit Dicarbonsäuren lassen sich auch diese Produkte durch Kettenverlängerung elastifizieren.

Als Komponente (b) geeignete cyclische Kohlensäureester sind beispielsweise Isobutylencarbonat, Butylen-2,3-carbonat. Sie sind in einfacher Weise aus den entsprechenden Epoxiden durch Umsetzung mit Kohlendioxid erhältlich.

Die Umsetzung der Komponente (a) mit der Komponente (b) erfolgt entweder in Substanz oder in geeigneten Lösemitteln, wie beispielsweise Wasser, Alkoholen, Ethern, Estern, Ketonen, Halogenkohlenwasserstoffen, aromatischen Kohlenwasserstoffen und aliphatischen Kohlenwasserstoffen. Die Reaktionspartner sollen in den verwendeten Lösemitteln oder Lösemittelgemischen zumindest grösstenteils löslich sein und letztere selbst sollen weder primäre oder sekundäre Aminogruppen noch Mercaptogruppen enthalten, weiche auch mit den cyclischen Kohlensäureestern reagieren können. Die bevorzugten Lösemittel sind Wasser, Alkohole und Etheralkohole, wie beispielsweise Methanol, Ethanol, Propanole, Butanole und Monoether von Diolen, z.B. Ethylenglykol, Diethylenglykol, Propylenglykol oder Dipropylenglykol mit den zuerst genannten Monoalkanolen.

Die Umsetzung der Komponenten (a) und (b) erfolgt im allgemeinen bei Temperaturen von 0 bis 80°C, vorzugsweise 15 bis 40°C. In einer besonders bevorzugten Ausführungsform der Erfinduug werden die Reaktionspartner bei Raumtemperatur gemischt und stehengelassen, bis die erforderliche Aminzahlabnahme erfolgt ist. Die Reaktionszeiten liegen im Bereich zwischen etwa 1 und etwa 48 Stunden.

Zur Herstellung der erfindungsgemässen Überzugsmittel werden die Komponenten (A) und (B) gemischt. Bei Komponenten mit niedriger Viskosität kann dies in Substanz erfolgen, wobei gegebenenfalls auf Temperaturen bis maximal 130°C erwärmt wird. Produkte höherer Viskosität werden vor der Mischung in organischen Lösemitteln gelöst. Dabei können übliche Lösemittel wie Alkohole, Ketone, Ester, Ether, Kohlenwasserstoffe etc. verwendet werden.

Die erfindungsgemässen Überzugsmittel können zusammen mit löslichen Farbstoffen, Füllstoffen, Pigmenten oder dgl. nach üblichen Methoden zu organisch gelösten Lacken verarbeitet werden. Diese können zusätzlich in der Lacktechnologie übliche Zusatzstoffe, wie Verlaufshilfsmittel, Entschäumer, Netzmittel, Härtungskatalysatoren sowie in untergeordneten Mengen zusätzliche Vernetzer und weitere Bindemittel enthalten.

Ihre Verarbeitung kann nach üblichen Methoden erfolgen, wie durch Streichen, Rakeln, Spritzen, Walzen, Giessen oder Drucken. Bevorzugt ist die Verarbeitung durch Lackspritzen nach den verschiedenen Ausführungsformen, sei es mit Luftdruckspritzpistolen oder auf einer Elektrostatikanlage.

Die Einbrenntemperaturen liegen im allgemeinen zwischen 130 und 200°C, vorzugsweise zwischen 150 und 180°C, die Einbrennzeiten bei 20 bis 30 Minuten, sofern mit Härtungskatalysatoren gearbeitet wird.

Als Härtungskatalysatoren sind Zinnverbindungen, wie beispielsweise Dibutylzinndilaurat, Dibutylzinnoxid, Zinnacetat und dgl., bevorzugt. Geeignet sind auch Bleiverbindungen, wie beispielsweise Bleinaphthenat, Bleioctoat oder Bleiacetat. Die Zusätze erfolgen in Mengen von 0,5 bis 4 Gew.%, vorzugsweise 1 bis 2,5 Gew.%, bezogen auf das Lackbindemittel.

Für die Herstellung von Pulverlacken werden jeweils feste Komponenten (A) und (B), deren Erweichungsprodukte aus Gründen der Blockfestigkeit jeweils > 60°C liegen sollten, trocken gemahlen und mit üblichen Zusätzen, wie Pigmenten, Füllstoffen und in untergeordneten Mengen Härtungskatalysatoren und Verlaufshilfsmitteln, beispielsweise auf Polyacrylatbasis, vermischt. Die Mischungen werden anschliessend bei Temperaturen um 100°C schmelzhomogenisiert (z.B. im Extruder). Nach Abkühlen der Extrudate auf Raumtemperatur werden diese gründlich gemahlen und die unterhalb einer Teilchengrösse von ca. 90 µm liegenden Pulverlackanteile durch Sieben abgetrennt. Die darüber liegenden Anteile werden bei weiteren Mahlungen erneut eingesetzt.

Die Applikation der Pulverlacke erfolgt in üblicher Weise durch elektrostatisches Pulversprühen. Die Einbrennbedingungen stimmen mit denen der konventionellen Lacke überein.

Werden die oben beschriebenen Pulverlacke einer nachträglichen Nassmahlung in Wasser unterzogen, bis eine Partikelgrösse < 10 bis 20 µm erreicht ist, erhält man stabile wässerige Pulversuspensionen, die wie die oben beschriebenen konventionellen Lacke appliziert und eingebrannt werden können. Bevorzugt ist auch hier die Verarbeitung durch Lackspritzen nach den verschiedenen Ausführungsformen, sei es mit Luftdruckspritzpistolen oder auf einer Elektrostatikanlage.

Werden in den erfindungsgemässen Überzugsmitteln als Komponente (A) Epoxid/Amin-Addukte eingesetzt, so sind diese nach Protonierung mit Säuren wasserlöslich oder dispergierbar. Sie lassen sich somit als Bindemittel für kathodisch abscheidbare Elektrotauchlacke einsetzen.

Die Herstellung der Elektrotauchlacke erfolgt nach üblichen Methoden. Als Neutralisationsmittel werden anorganische und organische Säuren, wie Ameisensäure, Essigsäure, Milchsäure oder Phosphorsäure, verwendet, wobei Carbonsäuren bevorzugt sind. Ihre Mengen sind so bemessen, dass Bad-p-Werte von 6,5 bis 8,0, vorzugsweise 7,0 bis 7,5, resultieren, damit eine Korrosion der Anlagen vermieden wird. Die Bäder können ausserdem weitere übliche Zusatzstoffe, wie Pigmente, Füllstoffe, Verlaufmittel, Netzmittel, oberflächenaktive Mittel sowie in untergeordneten Mengen zusätzliche andere Lackbindemittel und/oder Vernetzer enthalten.

Auch bei dieser Anwendung der erfindungsgemässen Lackbindemittel ist in der Regel der Einsatz von Härtungskatalysatoren von Vorteil, deren Art und Menge bereits oben bei der Verwendung in konventionellen Lacken beschrieben wurden.

Die erfindungsgemässen Überzugsmittel lassen sich so für das Überziehen von beliebigen elektrisch leitenden Substraten, wie beispielsweise Eisen, das gegebenenfalls chemisch vorbehandelt, z.B. phosphatiert sein kann, Aluminium, Kupfer und dgl., verwenden.

Die Abscheidespannungen betragen im allgemeinen 50 bis 500 V, vorzugsweise 150 bis 350 V. Für die Härtung der abgeschiedenen Überzüge sind Einbrennbedingungen erforderlich, wie sie bereits bei der Beschreibung der konventionellen Systeme beschrieben wurden.

Die folgenden Beispiele sollen die vorliegende Erfindung näher erläutern, ohne diese einzuschränken. Die in den Beispielen angegebenen Teile und Prozente beziehen sich, soweit nicht anders angegeben, auf das Gewicht.

Beispiel 1 :

Beispiel 1 beschreibt die Herstellung eines organisch gelösten Einbrennlacks, der als Komponente (A) ein Polyacrylatharz enthält.

a) Herstellung des Polyacrylatharzes

In einem Kolben mit Rührer, Rückflusskühler und Innenthermometer werden 800 Teile Essigsäure-n-butylester vorgelegt und unter Rühren in einer Stickstoffatmosphäre auf 100°C erwärmt. Anschliessend werden bei 100°C der Zulauf I, bestehend aus 520 Teilen Butandiolmonoacrylat, 610 Teilen tert.-Butylacrylat, 660 Teilen n-Butylacrylat, 200 Teilen Methylmethacrylat und 10 Teilen Acrylsäure, binnen 4 Stunden und der Zulauf II, bestehend aus 540 Teilen Essigsäure-n-butylester und 50 Teilen Azobis- isobutyronitril, binnen 6 Stunden zugetropft. Die entstehende 60%ige Lösung des Polyacrylatharzes in Essigsäure-n-butylester weist einen K-Wert nach Fikentscher von 24 (3%ig in Dimethylformamid), eine Säurezahl von 1 mg KOH/g und eine OH-Zahl von 98 mg KOH/g auf.

b) Umsetzungsprodukt aus Tris-aminoethylamin und Isobutylencarbonat

Zu einer 50%igen Lösung von 1000 Teilen Tris-aminoethyl-aimin in Ethanol wird bei Raumtemperatur unter Rühren eine 50%ige Lösung von 2522 Teilen Isobutylencarbonat in Ethanol hinzugefügt. Nach Abklingen der exothermen Reaktion (bis 40°C) lässt man die Mischung 48 Stunden bei Raumtemperatur stehen.

c) Herstellung des organisch gelösten Einbrennlacks

In einer Mischung aus 1000 Teilen des Acrylatharzes auf Beispiel 1a), 514 Teilen des Umsetzungsproduktes nach Beispiel 1b), 17 Teilen Dibutylzinndilaurat und 329 Teilen Ethylenglykolmonoethylether wird eine Mischung aus 214 Teilen Eisenoxidgelb, 107 Teilen 1.9-Anthrapyrimidin-2-carbonsäure- anthrachinolylamid und 107 Teilen Titandioxid angeteigt und in einer Rührwerksmühle mit 2100 Teilen Glasperlen (Durchmesser 2 mm) vermahlen, bis eine Körnigkeit nach DIN 53 203 von < 10 µm erreicht ist. Nach Abtrennen der Mahlkörper entsteht ein 55%iger Gelblack.

Dieser Lack wird mit wenig Essigsäure-n-butylester auf eine Auslaufzeit im DIN 4-Becher von 30 sec. verdünnt, auf Stahlbleche gespritzt und nach 5 minütigem Ablüften bei Rauinntemperatur 20 Minuten bei 160°C eingebrannt. Die eingebrannten Filme zeigen nach 50 maligem Hin- und Herreiben mit einem mit Methylisobutylketon getränkten Wattebausch keinen

Angriff.

Schichtdicke : 30 µm

Glanz ∢60° : 83%

Pendelhärte nach König : 120 sec.

Erichsen Tiefung : 10 µm

Beispiel 2 :

Beispiel 2 beschreibt die Herstellung eines organisch gelösten Einbrennlacks, der als Komponente (A) einen Polyester, speziell, ein Alkydharz enthält.

a) Herstellung des Alkydharzes

In einem Kolben mit Rührer, Wasserabscheider und Innenthermometer wird eine Mischung aus 1100 Teilen Ricinenfettsäure, 666 Teilen Phthalsäureanhydrid, 828 Teilen Trimethylolpropan, 1 Teil hypophosphoriger Säure und 62 Teilen einer aromatischen Benzinfraktion (Siedebereich : 185 bis 206°C) unter Stickstoff auf 200 bis 220°C erhitzt und kondensiert bis eine Säurezahl von ca. 20 mg KOH/g erreicht ist. Nach dem Abkühlen wird der Rückstand mit 880 Teilen Isobutanol aufgenommen.

Festkörpergehalt : 75%

OH-Zahl : 149 mg KOH/G

b) Herstellung des organisch gelösten Einbrennlacks

In einer Mischung aus 1000 Teilen des Alkydharzes aus Beispiel 2a), 272 Teilen Xylol, 1500 Teilen dis Umsetzungsproduktes nach Beispiel 1b), 30 Teilen Dibutylzinndilaurat und 250 Teilen Ethylenglykolmonoethylether wird eine Mischung aus 375 Teilen Eisenoxidgelb, 187,5 Teilen 1.9-Anthrapyrimidin-2-carbonsäure-anthrachinolylamid und 187,5 Teilen Titandioxid angeteigt und in einer Rührwerksmühle mit 3300 Teilen Glasperlen (Durchmesser : 2 mm) vermahlen, bis eine Körnigkeit nach DIN 53 203 von < 10 µm erreicht ist. Nach Abtrennen der Mahlkörper entsteht ein 60%iger Gelblack.

Der Lack wird mit wenig Xylol auf eine Auslaufzeit in DIN 4-Becher von 30 sec verdünnt, auf Stahlbleche gespritzt und nach 5 minütigem Ablüften bei Raumtemperatur 20 Minuten bei 180°C eingebrannt. Die eingebrannten Filme zeigen nach 50 maligem Hin- und Herreiben mit einem mit Methylisobutylketon getränkten Wattbausch keinen Angriff.

Schichtdicke : 25 µm

Glanz ∢60° : 85%

Pendelhärte nach König : 164 sec.

Erichsen Tiefung : 6,2 mm

Beispiel 3 :

Beispiel 3 beschreibt die Herstellug eines organisch gelösten Einbrennlacks, der als Komponente (A) ein Epoxid/Amin-Addukt enthält, und beispielsweise als Füller für die Automobillackierung geeignet ist.

a) Herstellung eines elastifizierten Epoxidharzes

1455 Teile eines handelsüblichen Pölyglycidylethers von 2.2-Bis-(4-hydroxyphenyl)-propan mit einem Epoxidäquivalentgewicht von 485 werden mit 412,5 Teilen eines handelsüblichen Polycaprolactondiols mit einem OH-Äquivalentgewicht von 275 in Gegenwart von 120 Teilen Xylol une 4,5 Teilen Dimethylbenzylamin ca. 2 Stunden bei 130°C umgesetzt. Das Epoxidäquivalentgewicht beträgt dann 1070. Das Harz wird mit 504 Teilen Isobutanol auf 75% Festkörper verdünnt und sofort, wie unter 3c) beschrieben, weiterverarbeitet.

b) Herstellung eines Ketimins aus Methylisobutylketon und N-Aminoethyl-piperazin

387 Teile N-Aminoethyl-piperazin und 511 Teile Methylisobutylketon werden gemeinsam erhitzt. In einem Temperaturbereich von 113 bis 147°C werden binnen $3\frac{1}{2}$ Stunden 54 Teile Wasser ausgekreist. Auf diese Weise wird eine ca. 75%ige Lösung des gewünschten Ketimins in Methylisobutylketon erhalten.

c) Herstellung des Epixod/Amin-Adduktes

Zu 2480 Teilen des elastifizierten Epoxidharzes nach Beispiel 3a) (75%ige Lösung) werden 489 Teile Ketimin aus Beispiel 3b) (75%ige Lösung) gegeben und die Mischung 2 Stunden auf 100°C erwärmt. Der Epoxidwert ist dann auf 0 gefallen. Anschliessend werden zwecks Hydrolyse des Ketimins bei 120°C 100 Teile Wasser hinzugefügt. Die Mischung wird, gegebenenfalls unter Zugabe weiteren Wassers, so lange destilliert, bis kein Methylisobutylketon mehr übergeht. Der Rückstand wird dann mit Isobutanol auf einen Festkörpergehalt von 65% verdünnt.

Höpler-Viskosität (50%ig in Ethylenglykolmonobutylether bei 20°C) : 4700 mPa.s

d) Herstellung des organisch gelösten Einbrennlacks

In einer Mischung aus 1065 Teilen des Epoxid/Amin–Adduktes nach Beispiel 3c), 600 Teilen des Umsetzungsproduktes nach Beispiel 1b), 20 Teilen Dibutylzinndilaurat und 350 Teilen Ethylenglykolmonoethylether wird eine Mischung aus 891 Teilen Titandioxid und 9 Teilen Russ angeteigt und in einer Rührwerksmühle mit 2000 Teilen Glasperlen (Durchmesser : 2 mm) vermahlen, bis eine Körnigkeit nach DIN 53203 von ca. 10 µm erreicht ist. Der nach Abtrennen der Mahlkörper erhaltene 65%ige Lack

wird in einer Nassfilmdicke von 100 µm auf Stahlbleche gerakelt und 20 Minuten bei 160°C eingebrannt. Die erhaltenen Filme zeigen nach 50 maligem Hin- und Herreiben mit einem mit Methylisobutylketon getränkten Wattebausch keinen Angriff.

Schichtdicke : 25 µm
Glanz ∢60° : 86%
Pendelhärte nach König : 178 sec
Erichsen-Tiefung : 6,5 mm

## Ansprüche

1. Hitzehärtbare Überzugsmittel, dadurch gekennzeichnet, dass sie als Bindemittel enthalten ein Gemisch aus

(A) 1 bis 90 Gew.% eines Polyadditions-, Polykondensations- oder Polymerisationsproduktes mit einem mittleren Molekulargewicht $\overline{M}_n$ von 500 bis 10000, welches im Mittel pro Molekül mindestens zwei OH- und/oder primäre und/oder sekundäre Amino-Gruppen besitzt, und

(B) 99 bis 10 Gew.% eines Umsetzungsprodukts aus

a) mindestens einem Polyamin, das im Mittel mindestens zwei primäre Aminogruppen pro Molekül und gegebenenfalls zusätzlich Hydroxylgruppen enthält, und

b) 75 bis 200 Mol.%, bezogen auf die primären Aminogruppen der Komponente a), mindestens eines cyclischen Kohlensäureesters der allgemeinen Formel (I)

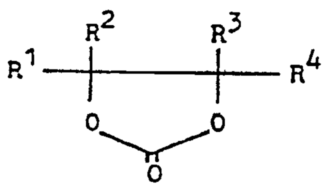 (I),

worin $R^1$, $R^2$, $R^3$ und $R^4$ untereinfinder gleich oder verschieden sind und für Wasserstoff, einen Methyl- oder einen Ethylrest stehen mit der Maßgabe, daß mindestens zwei Reste für Methyl und/oder Ethyl stehen.

2. Überzugsmittel nach Anspruch 1, dadurch gekennzeichnet, dass sie als Komponente (A) einen Polyester enthalten.

3. Überzugsmittel nach Anspruch 1, dadurch gekennzeichnet, dass sie als Komponente (A) ein Polyacrylat enthalten.

4. Überzugsmittel nach Anspruch 1, dadurch gekennzeichnet, dass sie als Komponente (A) ein stickstoffbasische Gruppen tragendes Polyadditionsprodukt, welches an aromatische Ringe gebundene Gruppierungen der allgemeinen Formel (II)

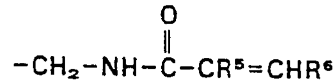 (II),

worin $R^5$ und $R^6$ untereinander gleich oder verschieden sind und für Wasserstoff oder eine Methylgruppe stehen, enthalten.

5. Überzugsmittel nach Anspruch 1, dadurch gekennzeichnet, dass sie als Komponente (A) ein Umsetzungsprodukt aus phenolischen Mannichbasen und Epoxidharzen enthalten.

6. Überzugsmittel nach Anspruch 1, dadurch gekennzeichnet, dass sie als Komponente (A) ein Umsetzungsprodukt aus einem oder mehreren aromatischen oder aliphatischen Epoxidharzen und einem oder mehreren primären oder sekundären Aminen enthalten.

7. Überzugsmittel nach einem der vorhergehenden Ansprüche, dadurch gekennzeichnet, dass sie nach zumindest teilweiser Neutralisation mit einer Säure wasserverdünnbar sind.

8. Verwendung der Überzugsmittel nach einem der Ansprüche 1, 2, 3 oder 6 als Bestandteil organisch gelöster Einbrennlacke.

9. Verwendung der Überzugsmittel nach einem der Ansprüche 1, 2, 3 oder 6 für die Pulverlackierung.

10. Verwendung der Überzugsmittel nach Anspruch 7 zur Herstellung kathodisch abscheidbarer Elektrotauchlacke.

11. Verwendung nach einem der Ansprüche 8, 9 oder 10. dadurch gekennzeichnet, dass katalytische Mengen mindestens eines Katalysators mit- verwendet werden.

12. Wässeriges Lackbad für die kathodische Elektrotauchlackierung, dadurch gekennzeichnet. dass es 5 bis 30 Gew.% eines Überzugsmittels nach Anspruch 7 enthält.

## Claims

1. A heat-curable surface-coating agent which contains, as binder, a mixture of

(A) from 1 to 90% by weight of a polyadduct, polycondensate or other polymer which has an average molecular weight $\overline{M}_n$ of from 500 to 10,000 and, per molecule, on average two or more OH or primary or secondary amino groups, or two or more OH, primary and secondary aminogroups, or two or more OH and primary or secondary amino groups, or two or more primary and secondary amino groups, and

(B) from 99 to 10% by weight of a reaction product of

(a) one or more polyamines which on average contain two or more primary amino groups per molecule, with or without hydroxyl groups, and

(b) from 75 to 200 mole %, based on the primary

amino groups of component (a), of one or more cyclic carbonic acid esters of the formula (I)

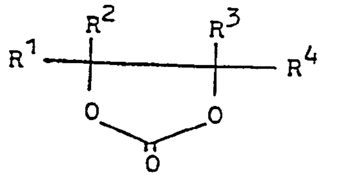

(I),

where $R^1$, $R^2$, $R^3$ and $R^4$ are identical or different and each is hydrogen, methyl or ethyl with the proviso that at least two radicals are methyl and/or ethyl.

2. A surface-coating agent as claimed in claim 1, which contains a polyester as component (A).

3. A surface-coating agent as claimed in claim 1, which contains a polyacrylate as component (A).

4. A surface-coating agent as claimed in claim 1, which contains, as component (A), a polyadduct which carries basic nitrogen groups and, bonded to aromatic rings, groups of the formula (II)

$$-CH_2-NH-\overset{O}{C}-CR^5=CHR^6 \qquad (II),$$

where $R^5$ and $R^6$ are identical or different and each is hydrogen or methyl.

5. A surface-coating agent as claimed in claim 1, which contains, as component (A), a reaction product of phenolic Mannich bases and epoxy resins.

6. A surface-coating agent as claimed in claim 1, which contains, as component (A), a reaction product of one or more aromatic or aliphatic epoxy resins and one or more primary or secondary amines.

7. A surface-coating agent as claimed in any of the preceding claims, which is water-dilutable on partial or complete neutralization with an acid.

8. The use of a surface-coating agent as claimed in claim 1, 2, 3 or 6 as a constituent of organically dissolved baking finishes.

9. The use of a surface-coating agent as claimed in claim 1, 2, 3 or 6 for powder coating.

10. The use of a surface-coating agent as claimed in claim 7 for preparing cathodically depositable electropaints.

11. The use as claimed in claim 8, 9 or 10, wherein a catalytically active amount of one or more catalysts is present.

12. An aqueous cathodic electrocoating bath which contains 5-30% by weight of a surface-coating agent as claimed in claim 7.

**Revendications**

1. Compositions de revêtement thermo-durcissables, caractérisées en ce qu'elles contiennent comme liant un mélange de

(A) 1 à 90% en poids d'un produit de polyaddition, de polycondensation ou de polymérisation d'un poids moléculaire moyen $\overline{M}_n$ de 500 à 10000, comprenant par molécule en moyenne au moins deux groupes OH et (ou) amino primaires et (ou) secondaires, et

(B) 99 à 10% en poids d'un produit de la réaction de

a) au moins une polyamine comprenant en moyenne par molécule au moins deux groupes amino primaires et éventuellement en outre des groupes hydroxyle et

b) 75 à 200% en molaires, par rapport aux groupes amino primaires du composant a), d'au moins un ester cyclique de l'acide carbonique de la formule générale (1)

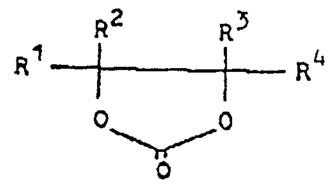

(I),

dans laquelle $R^1$, $R^2$, $R^3$ et $R^4$, qui peuvent être identiques ou différents, désignent chacun un atome d'hydrogène ou un radical méthyle ou éthyle, sous réserve qu'il y ait au moins deux radicaux méthyle et/ou éthyle.

2. Compositions de revêtement suivant la revendication 1, caractérisées en ce qu'elles contiennent comme composant (A) un polyester.

3. Compositions de revêtement suivant la revendication 1, caractérisées en ce qu'elles contiennent comme composant (A) un polyacrylate.

4. Compositions de revêtement suivant la revendication 1, caractérisées en ce qu'elles contiennent comme composant (A) un produit de polyaddition à groupes basiques azotés, comprenant des groupements de la formule générale (II)

$$-CH_2-NH-\overset{\overset{O}{||}}{C}-CR^6=CHR6 \qquad (II)$$

dans laquelle $R^5$ et $R^6$, qui peuvent être identiques ou différents, désignent chacun un atome d'hydrogène ou un radical méthyle, liés à des noyaux aromatiques.

5. Compositions de revêtement suivant la revendication 1, caractérisées en ce qu'elles contiennent comme composant (A) un produit de la réaction de bases de Mannich phénoliques et de résines époxy.

6. Compositions de revêtement suivant la revendication 1, caractérisées en ce qu'elle contiennent comme composant (A) un produit de la réaction d'une

ou de plusieurs résines époxy aromatiques ou aliphatiques et d'une ou de plusieurs amines primaires ou secondaires.

7. Compositions de revêtement suivant l'une des revendications précédentes, caractérisées en ce qu'elles peuvent être diluées à l'eau après une neutralisation au moins partielle à l'aide d'un acide.

8. Utilisation des compositions de revêtement suivant l'une des revendications 1, 2, 3 ou 6 comme constituants de vernis au four en solution organique.

9. Utilisation de compositions de revêtement suivant l'une des revendications 1, 2, 3 ou 6 pour le vernissage à la poudre.

10. Utilisation des compositions de revêtement suivant la revendication 7 pour la préparation de vernis déposables à la cathode pour le vernissage par immersion électrolytique.

11. Utilisation suivant l'une des revendications 8, 9, et 10, caractérisée en ce que l'on emploie concomitamment une proportion catalytique d'au moins un catalyseur.

12. Solution aqueuse de vernis pour le vernissage cathodique par immersion électrolytique, caractérisée en ce qu'elle contient entre 5 et 30% en poids d'une composition de revêtement suivant la revendication 7.